# Europäisches Patentamt
# European Patent Office
# Office européen des brevets

(19)

(11) Publication number: **0 107 253**
**A1**

(12) **EUROPEAN PATENT APPLICATION**

(21) Application number: **83201490.6**

(51) Int. Cl.³: **G 06 F 15/20**

(22) Date of filing: **19.10.83**

(30) Priority: **22.10.82 NL 8204086**

(43) Date of publication of application: **02.05.84**
**Bulletin 84/18**

(84) Designated Contracting States: **BE DE FR GB IT NL SE**

(71) Applicant: **N.V. Philips' Gloeilampenfabrieken,**
**Groenewoudseweg 1, NL-5621 BA Eindhoven (NL)**

(72) Inventor: **Deckers, Willem Harry Marie, c/o INT.**
**OCTROOIBUREAU B.V. Prof. Holstlaan 6, NL-5656 AA**
**Eindhoven (NL)**
Inventor: **op de Beek, Johannes Catharina Antonius, c/o**
**INT. OCTROOIBUREAU B.V. Prof. Holstlaan 6,**
**NL-5656 AA Eindhoven (NL)**

(74) Representative: **Faessen, Louis Marie et al,**
**INTERNATIONAAL OCTROOIBUREAU B.V. 6 Prof.**
**Holstlaan, NL-5656 AA Eindhoven (NL)**

(54) **Method of and device for determining the distribution of radiation attenuation in a body section.**

(57) Using the method and device for computer tomography in accordance with the invention, always the same filtering operation can be performed for image reconstruction, regardless of the method used to measure the measurement data: parallel (whether equidistant or not) or divergent (whether equiangular or not), provided that before and after the filtering of the measurement data there is performed a multiplication by a pre-conditioning factor and a post-conditioning factor, respectively. The pre-conditioning and post-conditioning factors are dependent on the type of reconstruction and on the position of a measurement data value in the group of measurement data filtered or to be filtered. The fact that the same filter can be used is important notably for computer tomography apparatus in which the (convolution) filter is embodied in an electronic circuit (by means of hardware). The back-projection device of a device in accordance with the invention is suitable for the back-projection of measurement data along either divergent measurement paths or parallel measurement paths for which it requires only the modification of a few constants applied to the back-projection device.

EP 0 107 253 A1

"Method of and device for determining the distribution of radiation attenuation in a body section".

The invention relates to a method of determining the distribution of radiation attenuation in a body section which is irradiated from a plurality of directions by a flat, fan-shaped beam of penetrating radiation which diverges from a source point, all directions extending through a central point and being situated in the body section, a group of measurement data being determined for each measurement direction, which is a measure of the radiation attenuation along an associated group of divergent measurement paths, each group of measurement being either convolved with a group of convolution numbers, or Fourier transformed, filtered and inverse Fourier-transformed, after which the measurement data thus treated is back-projected into a matrix of pixels.

The invention also relates to a device for determining the distribution of radiation attenuation in a body section, comprising: at least one source for generating a flat, fan-shaped beam of penetrating radiation for irradiating the body along a plurality of measurement paths which diverge from the source and which are situated in the body section, from a plurality of source positions which are regularly distributed over at least $180^\circ$C, a central ray in the divergent beam passing through a central point from each source position, an array of detectors for detecting radiation after passing through the body along the measurement paths in order to supply, for each source position, groups of measurement data which are a measure of the radiation attenuation occurring along the respective divergent measurement paths through the body section, a processing device which comprises a memory for the storage of measurement data,

- a filter device for filtering each group of measurement data,

- a back-projection device for allocating and back-projecting the filtered measurement data to matrix elements of a memory matrix for storing the sum of the back-projected, filtered measurement data, and

- a display device for displaying the accumulated back-projected measurement data stored in the memory matrix.

A method and device of this kind are known per se and are suitable for a type of image reconstruction technique. This is to be understood to mean the image reconstruction technique utilizing measurement data which belong to groups of parallel measurement paths or measurement data which belong to groups of measurement paths diverging from a point. In the former case it is often necessary to sort the measurement data, because the beam of penetrating (X-ray) radiation emitted by a point source is always a divergent beam. Such a sorting process requires additional processing time and also implies a substantial waiting time before the measurement of all the data belonging to any given group of parallel measurement paths, can be completed. It has been found that both the additional processing time and the waiting time are undesirable. In the second case (reconstruction by means of groups of "divergent" path measurement data) the additional processing time and waiting time are avoided but, for example, a correction for radiation hardening (as described in the United States Patent Specification 4,217,641) is not possible, because such a correction utilizes groups of parallel measurement data derived from the already reconstructed image. Obviously, it is possible to determine measurement data along divergent measurement paths from a reconstructed image, but a substantial amount of additional processing time is then required which is, of course, a drawback.

It is the object of the invention to provide a method of and a device for determining the distribution of radiation attenuation which are suitable for processing either parallel (not necessarily equidistant) or divergent (not necessarily equiangular) groups of measurement data in order to reconstruct an image of the radiation attenuation distribution and which even allow some of said groups of measurement data to be incomplete, as when in some source positions, the body to be examined is situated partly outside the beam of penetrating radiation.

To achieve this, a method in accordance with the invention is characterized in that prior to convolution or Fourier transformation, each measurement data value of a group is multiplied by a preconditioning factor which is determined by the cosine of the angle included between a central line connecting the point source to the central point, and the measurement path associated with the measurement data value to be pre-conditioned, after which the pre-conditioned measurement data is either convolved or Fourier transformed, filtered and inverse-Fourier-transformed as though the pre-conditioned measurement data had been measured along parallel measurement paths, the convolved or filtered measurement data being multiplied by a post-conditioning factor which is inversely proportional to the variation and directly proportional to the square of the cosine of the angle between the central ray and the measurement path associated with the convolved or filtered measurement data, after which the measurement data thus post-conditioned are back-projected along the same measurement paths along which those measurement data values were determined.

Further to achieve this, a device in accordance with the invention is characterized in that the processing device furthermore comprises arithmetic means for multiplying each measurement data value of each group by a pre-conditioning factor which is determined by the cosine of the angle included between a line connecting the source to the detector which measured the measurement data value and a central line connecting the source to a central point, and for multiplying each filtered measurement data values by a post-conditioning factor which is inversely proportional to the change of the angle between the central line and the measurement path associated with the filtered measurement data value, as a function of the associated measurement path, and which is proportional to the square of the cosine of this angle, the filtering device for filtering the pre-conditioned measurement data being a filtering device for filtering parallel and equidistantly measured measurement values, the back-projection device comprising means for multiplying a filtered, post-conditioned measurement data value by a distance factor which is inversely proportional to the square of the distance between a source point and a projection point of a pixel which projection point is situated on the central connecting line and in which pixel a back-projection is determined. The method and the device in accordance with the invention enable the same filtering to be used on each occasion (via convolution or Fourier transformation), each measurement data value being multiplied by a pre-conditioning factor prior to filtering and by a post-conditioning factor after filtering, the pre-conditioning and post-conditioning factors being dependent on the type of reconstruction and on the relative position of measurement data values within the group of measurement data. The possibility of using only one type of filtering for all types of reconstruction is notably important for a device for performing the method in which the (convolution) filter is implemented in an electronic circuit (i.e. by means of hard-ware), so that it cannot be adapted to the type of reconstruction by modification of a computer program. The distance factor to be used for the back-projection of the filtered measurement data can be adapted from the divergent path type of reconstruction to the parallel type of reconstruction simply by making it equal to one.

The invention will be described with reference to embodiments shown in the drawings; therein:

Figs. 1a and b show, partly in the form of a block diagram, a device in accordance with the invention,

Fig. 2 shows diagrammatically a customary arrangement of a radiation source and detectors with respect to one another,

Fig. 3 show diagrammatically a further arrangement of a radiation source and detectors with respect to one another,

Fig. 4 show diagrammatically the arrangement of a so-called fourth-generation computer tomography apparatus,

Fig. 5 illustrates a back-projection geometry to be used,

Fig. 6 is a flow chart for processing measurement data in order to form a reconstructed image,

Fig. 7 is a block diagram of a filtering device in accordance with the invention,

Fig. 8 shows a back-projection device in accordance with the invention,

Figs. 9a and b are further representations of details of the back-projection device of fig. 8,

Fig. 10 is a representation in greater detail of an address generator for the back-projection device shown in fig. 8,

Fig. 11 is a diagram illustrating the operation of the address generator shown in fig. 10, and

Fig. 12 shows a part of the control circuit for the back-projection device shown in fig. 8.

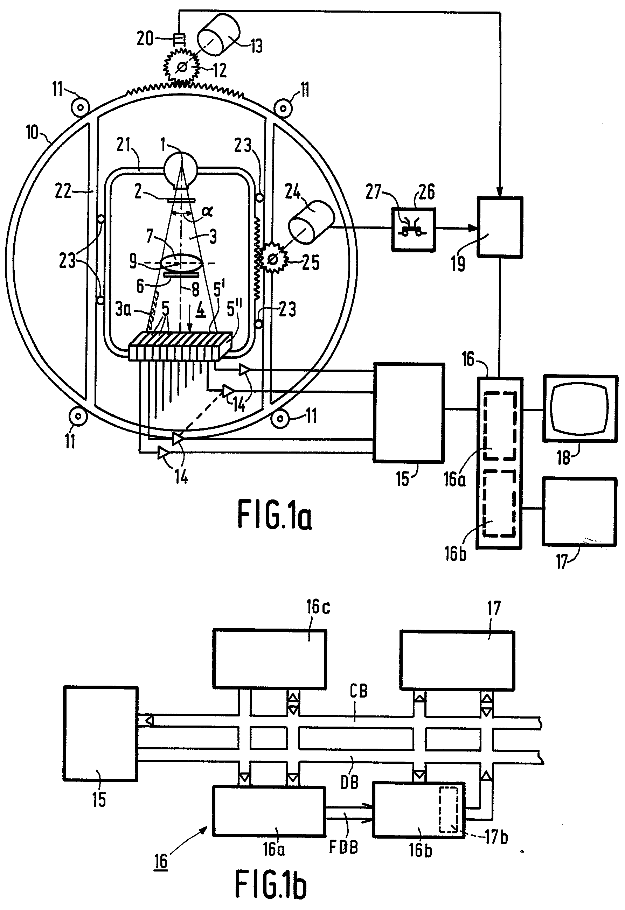

A computer tomography apparatus as shown diagrammatically in fig. 1a comprises a radiation source 1, preferably formed by an X-ray tube, for generating a flat beam 3 of X-rays which is to be limited by a slit diaphragm 2, which diverges through an angle     and which may have a thickness of from 1.5 to 35 mm. The radiation beam 3 is incident on an array $\underline{4}$ of individual detectors 5, each of which measures radiation which reaches the relevant detector 5, <u>via</u> a measurement path 3a. The width of a measurement path and the spacing of the measurement paths determine the spatial accuracy of the scanning and reconstruction of an object 7 which is arranged on a table 6. In order to enhance this accuracy (resolution) in known manner, the detector array $\underline{4}$ may be arranged to be asymmetrical with respect to a central ray 8 which passes from the source 1 through a central (rotation) point 9.

In one embodiment, the central ray 8 is incident on a detector 5 at the centre of the array 4 halfway between the centre and the edge of the detector 5, so that 1/4 of the detector 5 is situated to one side and 3/4 of the detector is situated to the other side of the central ray 8. The detector array 4 comprises, for example, 576 detectors 5, $\alpha$ being $43.2^\circ$ and the distance between the source 1 and the detector array 4 being 1 m. The array 4 of detectors 5 may be constructed, for example, as an elongate, gas-filled ionization chamber in which flat electrodes are arranged in a row parallel to one another.

The system formed by the radiation source 1 and the detector array 4 may be mounted on a frame 10 which is arranged to be rotatable about the central point 9 so that a sectional region of the object 7 can be irradiated from different directions (situated in one plane) by radiation beams 3. The frame 10 is guided by means of bearings 11 and is driven by means of a motor 13 and a transmission gear 12. The drive may be continuous, but may alternately be intermittent, the radiation source 1 preferably emitting radiation in a pulsed manner in the former case, so that the array 4 of detectors 5 produces a group of measurement data for each source position $\theta$ to be chosen.

The groups of measurement signals supplied by the detectors 5 are applied, _via_ an amplifier 14, to a signal converter 15 in which the measurement data are digitized after which they are presented to an arithmetic device 16. The arithmetic device 16 corrects the measurement data for off-set, followed by the formation of logarithmic values and calibration on the basis of the logarithmic values and calibration tables stored in a memory 17, after which the measurement data are stored in the memory 17. A matrix image of the distribution of radiation attenuation determined by the arithmetic device 16 can be displayed on a display device (monitor) 18. To achieve this, each group of measurement data is processed by a filtering device 16a which performs either a convolution or a Fourier transformation filtering operation and a back-transformation, and subsequently by a back-projection device 16b which distributes the filtered measurement data amongst storage cells of an image matrix stor set up in the memory 17.

A counter 19 counts the number of pulses generated by a pulse generator 20 during rotation of the frame 10, so that the count state of the counter 19 is a measure of the orientation of the frame 10 and hence a measure of the angular rotation $\theta$ relating to the successive measurement directions, which is stored with the group of measurement data associated with the angle $\theta$.

It has been found that the distance between the radiation source 1 and the object 7 should preferably be adaptable to the size of the object 7. Consequently, the radiation source 1 and the detector array 4 are mounted on a support 21 which is displaceable on guide rails 22 on bearings 23 by means of a toothed drive 25 which is coupled to a motor 24. The motor 24 can be activated via a switch 27 by means of a control circuit 26.

Fig. 1b is a more detailed representation of the arithmetic device 16 of fig. 1a. The arithmetic device 16 comprises the filtering device 16a, the back-projection device 16b and a control unit 16c which are connected to one another by means of a data bus DB and a control bus CB and also to the memory 17, the signal converter 15, the monitor and an input station for data and control (for the sake of simplicity, the latter two have been omitted because they are known per se). The measurement data stored in the memory 17 are applied, via the data bus DB, to the filtering device 16a in which they are processed in order to be applied, via a separate data bus FDB, to the back-projection device 16b. After having processed the data to be back-projected, the back-projection device 16b returns the back-projected data to the memory 17 via the data bus DB. The back-projection device 16b preferably comprises its own image memory 17b which is directly accessible and in which the back-projected image data are stored. Thus, the data bus DB need be used only after the reconstruction of a complete image of the radiation attenuation distribution.

Because the image memory 17b is directly accessible (_i.e._ much faster than the memory 17), image reconstruction can be performed in a shorter period of time.

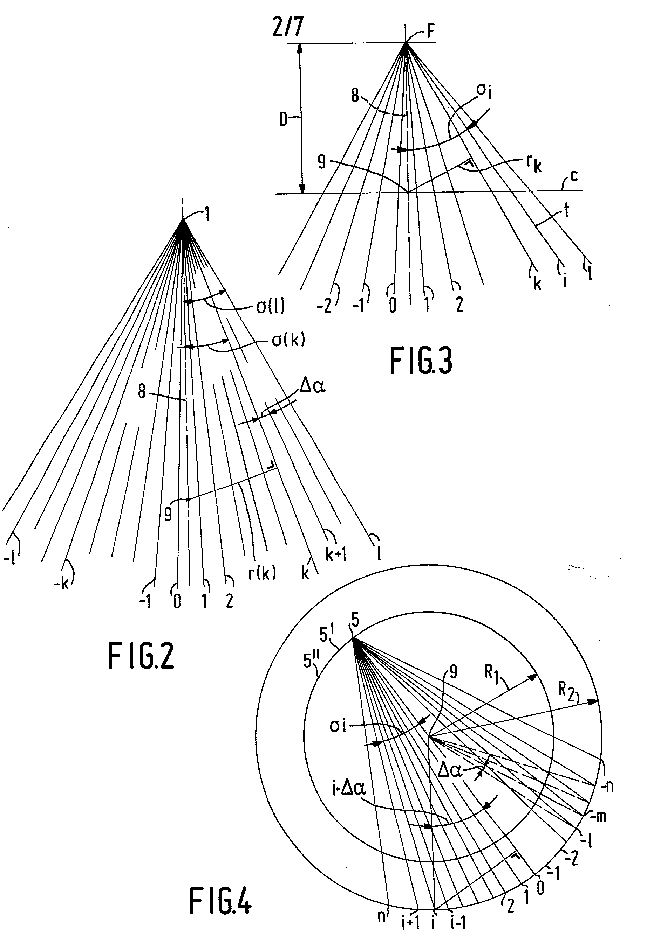

Fig. 2 shows diagrammatically the arrangement of the X-ray source 1 with respect to the detectors 5 which are preferably situated on an arc of a circle whose centre is situated in the point source 1. The measurement data representing the radiation attenuation $p(r')$, have been measured along a number of measurement paths ($\ldots$, -1, -k, $\ldots$, -2, -1, 0, +1, +2, $\ldots$, +k, +1, $\ldots$) which extend at a distance $r'$ from the central point 9 and which are symmetrically distributed with respect to the central ray 8. Even though the measurement paths are shown to be equiangularly spaced in fig. 2, the following derivation is not restricted thereto. The convolved value $\hat{p}(r)$ associated with a measurement path (k) at a distance $r(k)$ from the central point 9, can be in a general convolution formula as follows:

$$\hat{p}(r) = \int_{r'} q(r-r') \cdot p(r') \cdot dr' \qquad (1-1)$$

where: $q(r-r')$ is a weighting factor from a series of convolution factors yet to be determined, the integral being a function of the variable $r'$. Equation (1-1) can also be written as a function of a variable k:

$$\hat{p}(r) = \int_{k} q(r-r') \cdot p(r') \cdot \frac{dr'(k)}{dk} \cdot dk \qquad (1-2)$$

Equation (1-2) can be rewritten for the discrete value situation shown in fig. 1, as follows:

$$\hat{p}(1) = \sum_{k} q(1-k) \cdot p(k) \cdot dr(k)/dk \qquad (1-3)$$

where $d\,r(k)/d\,k$ is the Jacobian,

$\hat{p}(1)$    is the convolved value $\hat{p}$ associated with the measurement path 1,

$q(1-k)$ is a weighting factor which depends on the index difference between the measurement paths 1 and k, and

$p(k)$    is the measurement value measured along the measurement path having the index k.

Now, $q(1-k)$ is a weighting factor which depends on the variable $(1-k)$, so that the following expression may be substituted for $q(1-k)$:

$$q(1-k) = R_N^2 \cdot \left[ 2 \ \text{sinc} \ \pi (1-k) - \text{sinc}^2 \pi (1-k)/2 \right] \qquad (1-4)$$

assuming that $R_N = (2.s)^{-1}$ and $(r-r') = s.(1-k)$, in which the term between $\begin{bmatrix} - \end{bmatrix}$ represents a standardized, dimensionless known convolution factor series which depends only on the variable $(1-k)$ and which will be denoted hereinafter as Ramp $(1-k)$ for reasons yet to be described, the variable $R_N$ being equal to $(2.s)^{-1}$, the variable s being the mean length of arc at a given point between two measurements of a group (if the measurement paths were parallel and equidistant at a distance a, $R_N$ would amount to $(2a)^{-1}$). When the angle $\Delta\alpha$ enclosed by two neighbouring measurement paths k and k+1 is sufficiently small, the length of arc s is substantially equal to the shortest straight line passing through a point between the two measurement paths.

This length of arc s on a measurement path k at a distance U from the source point 1 is:

$$s(k,U) = U \cdot \left( \frac{d\sigma(x)}{d^x} \right)_{x=k} = U \cdot \frac{d\sigma(k)}{d^k} \qquad (1-5)$$

in which $\sigma(k)$ is the angle included between the central ray 8 and the measurement path k.

The mean length of arc in the region between the measurement path k and 1 is defined as $\bar{s}(1,k;U)$ which is sufficiently accurately approximated by the geometrical mean value $\sqrt{s(1;U).s(k,U)}$.

It follows therefrom that:

$$q(1-k) = \frac{1}{s(1;U).s(k;U).4} \cdot \text{Ramp} \ (1-k) \qquad (1-6)$$

Furthermore, r(k) (equation 1-3) is the distance between the central point 9 and the ray k. When the distance between the point source 1 and the central point is assumed to be D, $r(k) = D. \sin \sigma(k)$      (1-7).

When equations (1-6) and (1-7) are inserted in (1-3), it follows that:

$$\hat{p}(1) = \sum_k \left( (4.s(1;U).s(k;U))^{-1} \cdot \text{Ramp} \ (1-k).p(k).\frac{d(D \ \sin \ (k))}{dk} \right.$$

By using equation (1-5), it follows that:

PHN 10.482

$$\hat{p}(1) = \frac{D}{4U^2} \cdot \sum_k \left(\frac{d \quad (1)}{d1} \cdot \frac{d \quad (k)}{dk}\right)^{-1} \cdot \text{Ramp } (1-k) \cdot p(k) \cdot \cos \quad (k) \cdot \frac{d \quad (k)}{dk}$$

So

$$\hat{p}(1) = \frac{D}{4U^2} \cdot \left(\frac{d \; \delta'(1)}{d1}\right)^{-1} \cdot \sum_k \text{Ramp } (1-k) \cdot p(k) \cdot \cos \delta(k)$$

Or

$$\hat{p}(1) = \frac{D}{4U^2} \cdot \left(\frac{d \; \delta'(1)}{d1}\right)^{-1} \cdot g(1) \qquad\qquad (1-8)$$

Where

$$g(1) = \sum_k \text{Ramp } (1-k) \cdot p(k) \cdot \cos \delta'(k).$$

Equation (1-8) is a convolution calculation which can be generally used in any computer tomography device suitable for processing groups of measurement data values which have been measured along groups of divergent measurement paths. After weighting each measured value $p(k)$ with the cosine of the angle $\delta(k)$ between an associated measurement path k and the central ray 8, the measurement data values thus pre-conditioned are convolved using the standardized, dimensionless convolution factor series (defined between $\begin{bmatrix} . \end{bmatrix}$ in equation (1-4)), after which the convolved measurement data should be multiplied by a post-conditioning factor $(d \; \delta'(1)/d1)^{-1}$ and, upon back-projection of a measured value $\hat{p}(1)$ thus treated, the value to be assigned to a point should be weighted again by $D.(4.U^2)^{-1}$, for which back-projection should take place at a distance $r(1)$ from the centre 9 along the measurement path 1, which is incined at an angle $\delta(1)$ with respect to the central ray 8 and along which the value $p(1)$ has been measured.

The above general formulae will be further considered hereinafter for the various types of computer tomography scanners.

When the measured values $p(k)$ are measured along measurement paths 1 where two arbitrary neighbouring measurement paths k and 1+1 each time include the same apex angle $\Delta \alpha$ (equiangular distribution of the measurement paths 1), the value $d \delta'(1)/d1$ will be constant and equal

to $\Delta\alpha$. The angle $\delta(1)$ will then equal $(1-\frac{1}{2}).\Delta\alpha$.
Equation (1-8) then becomes:

$$\hat{p}(1) = \frac{D}{4.U^2.\Delta\alpha} . g(1) \qquad\qquad (1-9)$$

It is clearly shown that the post-conditioning factor $\Delta\alpha^{-1}$ has thus become independent of the variable 1, so that the step of multiplication by $\Delta\alpha^{-1}$ need not be separately performed but can simply be taken into account for the back-projection as a constant during a preceding calculation (for example, prior to the execution of or during the convolution calculations) or during a subsequent calculation.

It can simply be established that, if the central ray 8 were situated asymmetrically between the measurement paths 1 and -1, for example $\Delta\alpha/4$ between the measurement path 1 and the central ray 8, equation (1-9) would undergo only a small modification: only the pre-conditioning factor $(\cos (k-\frac{1}{2}) \Delta\alpha)$ would change and in the present example the pre-conditioning factor would be $(\cos (k-3/4).\Delta\alpha)$. Such a measurement arrangement is sometimes used for enhancement of the resolution in the reconstructed image.

A typical non-equiangular distribution of the measurement paths as shown in fig. 3 implies the following derivation for the necessary pre-conditioning and post-conditioning factors:

The measured values $p(k)$ are measured by means of detectors which are arranged in a straight line and which measure radiation along a measurement path which has a width $\underline{a}$ on a line C which is situated at a distance D from the focus F of the radiation source. Again:

$$\hat{p}(1) = \sum_k q(1-k).p(k).\frac{dr(k)}{dk} \qquad\qquad (1-3)$$

and

$$q(1-k) = R_N^2 . \text{Ramp} (1-k) \qquad\qquad (1-4)$$
wherein

$$R_N^2 = (4.s(1;U).s(k;U)^{-1}$$

It can be deduced from fig. 3 that:

$$tg\ \delta'(i) = (i-\tfrac{1}{2}).a.D^{-1}$$

$$\cos\delta'(i) = \left[1 + ((i-\tfrac{1}{2})\ a.D^{-1})^2\right]^{-\frac{1}{2}}$$

so $\delta'(i) = artan\ ((i-\tfrac{1}{2})\ .\ a\ .\ D^{-1})$

Furthermore:

$$r(k) = D.\sin(\delta'(k))\qquad\text{and}$$

$$s(i;U) = U.\frac{d\ \delta'(i)}{di}\quad,$$

where U is the distance between an arbitrary point $\underline{t}$ on a measurement path $\underline{i}$ and the focal point F.

Using the foregoing it can be demonstrated that from (1-4) and (1-3) and $\underline{via}$ $\hat{p}(1)=D^2.(4.U^2.d\ \delta'(1)/d1)^{-1}.$
g(1)                     (1-8)

where

$$g(1) = \textstyle\sum_k Ramp\ (1-k).p(k).\cos\ \delta'(k)$$

it follows that:

$$\hat{p}(1)= \frac{D^2}{4.a.U^2}\ (1+((1-\tfrac{1}{2})a/D)^2.\textstyle\sum_k(1+((k-\tfrac{1}{2})a/D)^2)^{-\frac{1}{2}}.$$

$$p(k).Ramp\ (1-k)\qquad\qquad\qquad (1-10)$$

Consequently, also when a non-equiangular distribution of measurement paths defined by a straight row of detectors of equal width is used, the same convolution filter can be used as in a computer tomography apparatus supplying measured values which have been determined along parallel equidistant measurement paths. The arrangement shown in fig. 3 also necessitates multiplication by a pre-conditioning factor $(1 + ((k-\tfrac{1}{2}).a/D)^2)^{-\frac{1}{2}})$ and, after convolution, by a post-conditioning factor $(1 + ((1-\tfrac{1}{2}).a/D)^2)$ in order to enable the use of the same (parallel) convolution filter.

Fig. 4 shows a measuring arrangement for determining measured data p(k) in a so-called fourth generation computer tomography apparatus, utilizing an array of detectors with a ring of equiangularly arranged detectors. In
fig. 4 the detectors are arranged to be stationary at a
distance R1 from the centre of rotation 9. The point source
(focus of X-ray tube) rotates at a distance R2 about the
centre 9, a group of measured values thus being determined
for a series of successive positions of the point source
along measurement paths n, ... 1, 0, -1, ... -n by means of
a single detector 5. Each of the neighbouring detectors 5'
and 5" also supplies a group of measurement data).

It will be apparent that it is also possible to
make the X-ray source (point source 1, fig. 1) travel
along the circle having the radius $R_1$ and to arrange the
detectors on the circle having the radius $R_2$. Such a re-
versal has no effect on the validity of the derivation,
given hereinafter, of the pre-conditioning factors, the
use of the (parallel) convolution filter, and the post-
conditioning factors (providing that $R_1$ and $R_2$ are inter-
changed in the following equations).

The following general formula is used:

$$\hat{p}(1) = \frac{D}{4U^2} \cdot d(\delta'(1)/d1)^{-1} \cdot g(1) \tag{1-8}$$

where $g(1) = \sum_k \text{Ramp} (1-k) \cdot p(k) \cdot \cos \delta'(k)$

For the situation shown in fig. 4:

$$\tan(\delta i) = R_2 \cdot \sin(i \cdot \Delta\alpha) \cdot (R_1 + R_2 \cdot \cos(i \cdot \Delta\alpha))^{-1}$$

from which it can be deduced that:

$$(d\,\delta'(1)/d1)^{-1} = \frac{R_1^2 + R_2^2 + 2R_1 \cdot R_2 \cdot \cos(1 \cdot \Delta\alpha)}{(R_2^2 + R_1 \cdot R_2 \cdot \cos(1 \cdot \Delta\alpha)} \tag{1-11}$$

and

$$\cos(\delta'(k)) = \frac{R_1 + R_2 \cdot \cos(k \cdot \Delta\alpha)}{(R_1^2 + R_2^2 \cdot 2 \cdot R_1 \cdot R_2 \cdot \cos(k \cdot \Delta\alpha))^{\frac{1}{2}}} \tag{1-12}$$

Both equations (1-11) and (1-12) can be rewritten (where
$R_1/R_2 = v$) as:

$$Q(1) = (d\,\delta' i/di)^{-1} = \frac{v^2 + 1 + 2V \cos(1 \cdot \Delta\alpha)}{(1 + V \cdot \cos(1 \cdot \Delta\alpha)} \tag{1-11'}$$

$$Q(k) = \cos \delta(k) = \frac{V + \cos (k. \Delta \alpha)}{V^2 + 1 + 2V . \cos (k. \Delta \alpha)} \qquad (1-12')$$

After inserting equations (1-11') and (1-12'), the general formula (1-8) becomes

$$\hat{p}(1) = \frac{R_1}{4U^2. \Delta \alpha} . \frac{V^2 + 1 + 2V.\cos (1. \Delta \alpha)}{1 + V.\cos (1. \Delta \alpha)} . g(1) \qquad (1-13)$$

wherein

$$g(1) = \sum_k Ramp(1-k).p(k). \frac{V + \cos (k. \Delta \alpha)}{V^2 + 1 + 2V.\cos (k. \Delta \alpha)}$$

It will be clear that as a result of the use of the convolution calculation in accordance with equation (1-13) (non-equiangular distribution of measurement paths) it will not be necessary to form an equiangular distribution of measurement paths by interpolation which would otherwise be required for the convolution calculations according to the present state of the art.

It is to be noted that the angle $\Delta \alpha$ used in equation (1-13) is that between two lines passing through the centre of rotation 9 from two successive source positions (1, m); this is in contrast to the angle $\Delta \alpha$ in equation (1-9) which is that between two neighbouring measurement paths which extend from a source position $\theta$ to two neighbouring detectors 5.

The above derivations of convolution formulae have been performed for situations in which the measured values p(k) are determined along a group of measurement paths in a divergent beam of radiation. However, in a substantial number of computer tomography apparatus the measured values are presented in groups determined along parallel measurement paths by resorting on the basis of sets of divergent groups of measurement paths. Using equation (1-3) and (1-4):

$$\hat{p}(1) = \sum_k R_N^2 . Ramp (1-k).p(k).dr(k)/dk \qquad (1-4')$$

where
$R^N$ equals $(2.s)^{-1}$ and $\underline{s}$ represents the mean length of arc through a given point between two measurement paths. In the case of parallel measurement paths, therefore, $\underline{s}$ is the mean distance between the measurement paths. The variable $R_N^2$ can be rewritten as:

$$R_N^2 = \left[ 4 \cdot \left( \frac{dr(x)}{dx} \right)_{x=k} \cdot \left( \frac{dr(x)}{dx} \right)_{x=1} \right]^{-1}$$

After inserting $R_N^2$ in (1-4') it follows that:

$$\hat{p}(1) = \frac{(dr(1)/d1)^{-1}}{4} \cdot \sum_k R_{amp}(1-k) \cdot p(k) \qquad (1-14)$$

It will be clear that a weighting operation (multiplication by a post-conditioning factor $((dr(1)/d1)^{-1}$ is required only after convolution. The pre-conditioning factor $(\cos(\delta(k)$, see equation (1-8)) found thus far now equals 1, because the measurement paths now extend parallel to one another (the angle $\delta(k) = 0$). The post-conditioning factor depends on the distance between the successive measurement paths. When the group of parallel measurement paths is obtained by resorting on the basis of sets of divergent measurement paths (which are equiangularly distributed), the distance between the measurement path and a central measurement path $r(1) = D \cdot \sin(1-\frac{1}{2}) \cdot \Delta\alpha$ , in which D represents the distance between the source 1 and the centre of rotation 9, 1 represents the index number of the measurement path for which a convolved measured value is determined, and $\Delta\alpha$ represents the angle between two neighbouring measurement paths in the divergent beam. Taking into account a distance function thus described, the convolution function in this situation will be:

$$\hat{p}(1) = \frac{1}{4 \cdot \Delta\alpha \cdot D} \cdot \left( \cos(1-\frac{1}{2}) \cdot \Delta\alpha \right)^{-1} \cdot \sum_k R_{amp}(1-k) \cdot p(k) \qquad (1-15)$$

It is to be noted that for back-projecting the convolved measured values, the distance between those measurement paths which are not equidistantly spaced, must be taken into account.

It will be apparent that the use of a convolution calculation employing equation (1-14) (non-equidistant parallel distribution of the measurement paths) makes it unnecessary to perform interpolations in order to obtain an equidistant distribution of measurement paths which would otherwise be necessary according to the present state of the art.

When the measured values $p(k)$ have been determined along parallel measurement paths which are equidistant, equation $(1-14)$ becomes the known formula:

$$\hat{p}(1) = \frac{1}{4a} \cdot \sum_k \text{Ramp} (1-k) \cdot p(k) \qquad (1-16)$$

This formula $(1-16)$ is known, for example, from $P_{r}oc.$ Nat. Acad. Science, USA, Vol. 6S, No. 9, pages 2236-2240, September 1971, in which it is derived in a completely different manner.

In the foregoing, equations $(1-8)$, $(1-10)$, $(1-13)$ and $(1-14)$ have been derived for convolution calculations on measured data determined along non-equiangularly or non-equidistantly (parallel) distributed measurement paths. Such formulae also enable convolution calculations and back-projection calculations to be performed in the following cases in which the processing of measurement data would stall according to the present state of the art:

I. When the number of measured data values associated with a group (for example, 576 measured values) is greater than the maximum number of data values in group which can be processed by the filtering device 16a and/or the back-projection devices 16b (for example 512 or 256). In accordance with the present state of the art, a new group of 512 or 256 measured data values should then be calculated by interpolation from the 576 measured data values, said new group being associated with equiangularly distributed ( or equidistantly parallel distributed) notional (wider) measurement paths. The resolution attainable is thus restricted. In accordance with the invention, a suitable group of (512 or 256) measured data values can be selected from the (excessively large) group of (576) measured data values without causing the resolution to deteriorate, for example, in the central region of the image to be reconstructed. The measured data values situated in the central part of the suitable new group are selected to correspond to those of the excessively large group. Between the measured data values situated in the central region of the new group and the measured data values situated at the outer "edges" of the new group, the "width" of the measurement paths relating to successive measured data values, is made to increase according to a function which can be differentiated (for example, a $\cos^2$ function). Taking a numerical example: assume that the excessively large group comprises 576 measured data values, and the new group comprises only 512 measured data values, if the resolution within the central region is determined by 400 measured data values, it may not be affected. The remaining (576 - 400) measured data values of the excessively large group must then be distributed among (512 - 400) measured data values of the new group in such a way that a differentiable, increasing function (because $\frac{d(\sigma(1))}{dl}$ ) must exist) is achieved which extends from the edge of the central region to a maximum which need not necessarily coincide with the respective outer edge of the new group.

Such a transition can be effectively used wherever measurement data having a high resolution and measurement data deliberately measured at a low resolution, are to be combined (e.g. by using wide detector elements at the edge of the detector arrray 4).

II. When the number of a group of measured data values is incomplete. Notably when measured data values are lacking at one side of the group, for example, because an arm of the patient is situated outside the X-ray beam (in the case of different positions of the X-ray source), the group of measured data values should be complemented so that the measurement data can be processed without giving rise to errors. Assuming that the total sum of all measured data values should be (substantially) the same for each source position, any measured data value that is lacking has to be determined and provided for each incomplete group of measured data values (the total sum minus the sum of the measured data values forming the incomplete group); such a measured data value would have to be measured along a notional wide measurement path with a large detector. When the measurement data is incomplete at both sides of a group, it is necessary to distribute the difference between the total sum and the sum of the incomplete group between both sides while taking into account the actual circumstances such as: how the patient is positioned with respect to the central ray 8 of the X-ray beam. From the grou of measured data values a transition should be made to data values relating to increasingly wider measurement paths ( in accordance with a differentiable function) so that they connect with the data generated which relates to notional wide measurement paths. It will be apparent that the realization of such a transition will be at the expense of that part of the measurement data which is adjacent to the "wide" measurement data and which has been measured with a much higher resolution by means of the detectors 5.

After convolution and possibly multiplication by a post-conditioning factor, the measurement data thus treated must be back-projected into an image storage matrix by the back-projection devices 16b. The final attenuation value $f(x,y)$ relating to a point p $(x,y)$ can be written as:

$$f(x,y) = c \sum_\Theta U^{-2}.G(1. \Theta )     (2-1)$$

where c: is a constant in which <u>inter</u> <u>alia</u> the distance between the centre of rotation g and the X-ray source 1, is taken into account, U: is the distance between the X-ray source 1 and the point x, y, and

$G(1, \Theta ) = g(1, \Theta ) . d \acute{\sigma} (1, \Theta )/d1)$, see equation $(1-8)$.

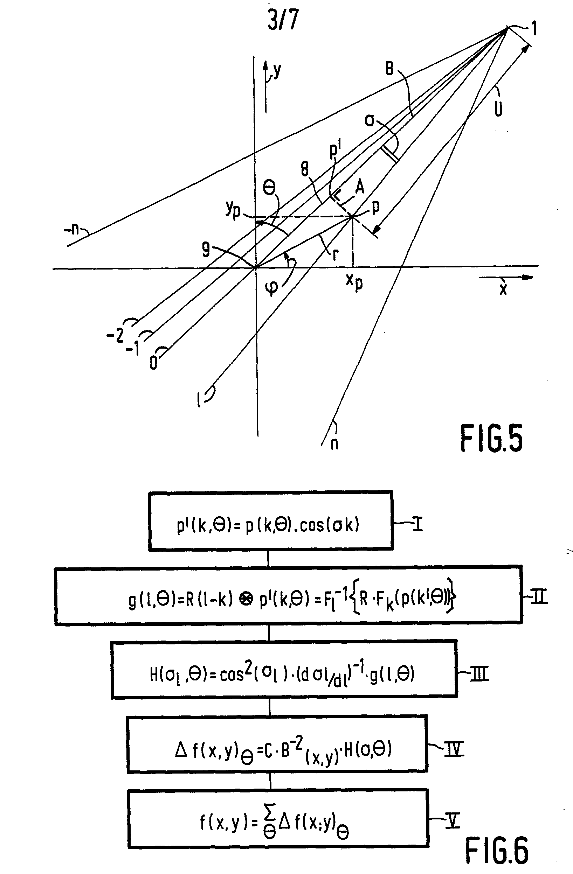

This is shown in fig. 5 for the sake of clarity. In equation $(2-1)$ both the variable U and the variable l are dependent on the point $p(x, y)$ to be selected. In order to enable the back-projection device 16b to be compa-

0107253

ratively simple implemented, equation (2-1) is transformed as follows:

$$f(x,y) = C \sum_{\Theta} \cdot \frac{\cos^2 \delta_1}{B^2} \cdot G(\delta_2, \Theta) \quad (2\text{-}2)$$

in which $B = U \cdot \cos \delta = D + r \sin(\Theta - \varphi)$.

The index 1 in equation (2-1) is now expressed in the angle $\delta_1$, because a given angle $\delta$ is associated with a given value of 1. Equation (2-2) can be further simplified:

$$f(x,y) = C \sum_{\Theta} \frac{1}{B^2} \cdot H(\delta_1; \Theta) \quad (2\text{-}3)$$

in which

$$H(\delta_1, \Theta) = \cos^2(\delta_1) \cdot G(\delta_1, \Theta) =$$

$$\cos^2(\delta_1) \cdot (d\delta_{(1)}/dl)^{-1} \cdot g(\delta_{(1)}, \Theta)$$

$$(2\text{-}4)$$

It follows from equation (2-4) that a convolved measured value g(l) associated with an angle $\delta_1$ in the divergent beam of X-rays, is to be multiplied by the factor $(d\delta_1/dl)^{-1}$ as well as by $\cos^2 \delta_1$, after which the actual back-projection is performed in the back-projection device 16b. During back-projection, a weighting operation is performed which is inversely proportional to the distance B between the source point 1 and the projection point p' of the point p(x, y) on the line 1-9.

The reconstruction of an image of an irradiated object 7 can be subdivided into the steps shown in a general diagram in fig. 6. Each measured data value in the group of measurement data $p(k, \Theta)$, is multiplied during a first step I by an associated pre-conditioning factor $\cos(\delta_k)$. During the second step II, the measured data values $p'(k, \Theta)$ of a group thus pre-conditioned are convolved or filtered in a manner as though the measured data values had been measured along parallel measurement paths (in fig. 6, this is denoted by

$$g(1, \theta) = R(1-k) \otimes p'(k, \theta) = F_1^{-1} \left\{ R \cdot F_k \left\{ p'(k, \theta) \right\} \right\}$$

in which $F_k \left\{ \cdot \right\}$ means a Fourier transformation to k and $F_1^{-1} \left\{ \cdot \right\}$ means an inverse Fourier transformation back to 1. During the third step III, the measured data values thus convolved are multiplied by a post-conditioning factor which is proportional to $(d\,\delta_1/dl)^{-1}$ and to $\cos^2 \delta_1$. During the fourth step IV, back-projection data thus provided for all points (x, y) situated on the projection or measurement path 1, are weighted by $B^{-2}$ (x, y), after which during a fifth and final step the weighted back-projection value $\Delta$ f(x, y) is added to the back-projection value f(x, y) calculated thus far for a point (x, y). Because all steps I through V are actually mutually independent, the calculations of step $\underline{i}$ (i = I, II, III or IV) for a next group of measurement data may commence as soon as the results of the preceding group of measurement data have been "taken transferred to over" by the step i + 1. In the filtering device 16a and the back-projection device 16b (see fig. 1b), therefore, a so-called pipe-line processing technique can advantageously be used.

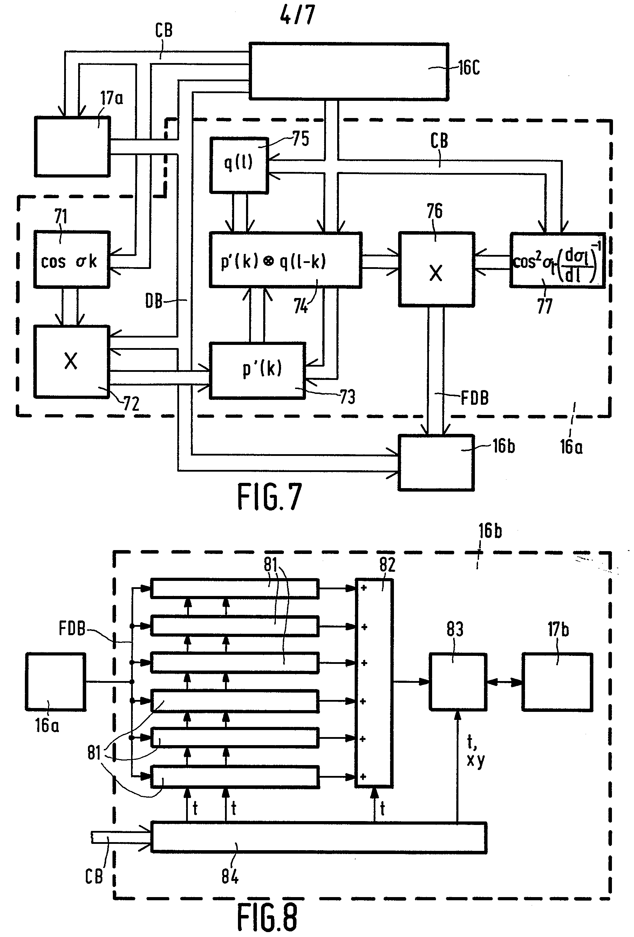

Fig. 7 shows a block diagram of an embodiment of a filtering device 16a. The measured data values determined by means of the source 1 and the detectors 5 shown in fig. 1a, are stored in a given section $\underline{17a}$ of the memory 17, the sequence of the measured data values being determined by the position $\underline{k}$ of the detector 5 in the detector array 4, the position of the measured data thus also being determined. The measurement data stored in the memory section 17a are recalled by means of an address $\underline{k}$ which is formed by an address generator in the control unit 16c. In its simplest form the address generator comprises a pulse generator and a counter which is connected thereto and whose content forms an address. A generated address $\underline{k}$ is also presented to a memory 71 in which the weighting factors (-pre-conditioning factors) $\cos \delta_k$ are stored. The measured data value p(k) and the weighting factor $\cos \delta_k$ are applied to a multiplier 72, so that the pre-conditioned measured data value p'(k) is generated at the output thereof. The

0107253

measured data values p'(k) thus obtained are stored in a buffer memory 73 which may consist of a further part of the memory 17 (fig. 1b). The measured data values p'(k) are fetched by a convolution unit 74, and so are a row of convolution factors q(1) which are stored in a memory 75. The convolution unit 74 calculates a group of convolved measured data values $g(\delta_1)$ in known manner from each pre-conditioned group of measured data values p'(k). The filtered value $g(\delta_1)$ is applied to a multiplier 76, a second input of which receives a post-conditioning factor $\cos^2 \beta(1) \cdot (d\delta_1/d1)^{-1}$. The post-conditioning factors are stored in a post-conditioning factor memory 77 which is preferably formed by a programmable memory (similar to the memory 71), so that the pre-conditioning and post-conditioning factors can be adapted to the geometry of the source 1 and the detector array 4 (notably also if one or more detector elements 5 were to become defective). The result from the multiplier 76 is applied to the back-projection device 16b. The back-projection device 16b also receives, in the form of a few data values, the orientation of the source 1 with respect to the x-y coordinate system, so that the back-projection device 16b always receives a group of measured data values to be back-projected plus the associated constant values concerning the geometrical orientation with respect to the pont of rotation 9 ( x = y = 0). Instead of using a convolution unit 74, the filtered value $g(\delta_1)$ can also be calculated in known manner by means of Fourier transformation, filtering and inverse-Fourier-transformation, utilizing for example, the Ramp filter or Shepp filter.

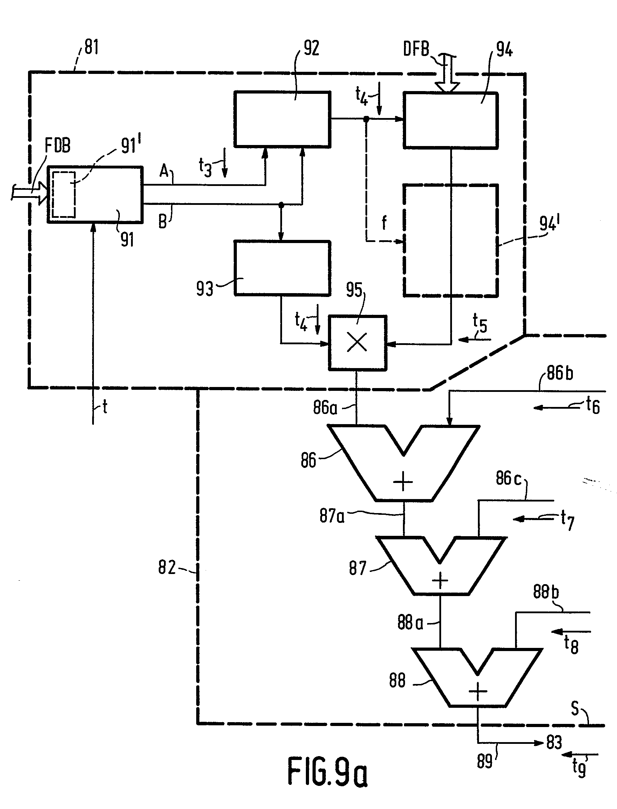

Fig. 8 is a more detailed representation of a back-projection device 16b in accordance with the invention. The back-projection device 16c comprises several (16) parallel operating back-projection segment processors 81, an adder 82, a memory control circuit 83, an image memory 17b and a pipeline control circuit 84. From the filtering device 16a, each segment processor 81 receives, via the bus FDB, a profile $H(\delta, \theta_j)$ to be back-projected and the associated geometrical constant values and stores this set of information in a first part of profile memories (94, see fig. 9). The constant values stored with a profile H($\delta$, $\theta_j$) will be explained hereinafter. _Via_ a control circuit 84, control and counting pulses _t_ are presented to each segment processor 81. In each segment processor 81 a radiation attenuation contribution $\Delta f(x, y)$ is calculated for one given image element having the coordinates x, y. All contributions $A_j f(x, y)$ calculated by the segment processors $81_j$ are added together by the adder 82, the sum of the various contributions being added as a unit to the previously calculated sums at the memory location (x, y) of the image memory 17b. The foregoing operation is performed by the memory control circuit 83 which receives a control pulse _t_ and the associated address (x, y) of the image memory 17b at the correct instant _via_ the pipeline circuit. When a sum of the contributions from each profile H($\delta_1$, $\theta_j$) has been calculated for each address (x, y), in each segment processor 81 a change-over is made to a second section of the profile memories (94, fig. 9). During the back-projection of a profile H($\delta_1$, $\theta_j$) stored in the first section, a second profile is stored in said second section. Thus, after the change-over, contributions will be calculated again (starting with $x_o$, $y_o$) for each pixel x, y on the basis of the second profile stored in the second section of the profile memory 94, a new profile then being loaded into the first section of the profile memory 94. The operation of the profile memory 94 and the control circuit 84 will be described in detail hereinafter.

It is to be noted that, because of the segment processing of the back-projection 16b, an advantage is obtained in that, should a segment processor 81 operate incorrectly or break down completely, reconstructions can still be performed by deactivating the faulty segment processor 81 and corresponding adaptation of the adder 82. Obviously, reconstruction will then be slower.

Fig. 9a shows a block diagram of a back-projection segment processor 81 and a part of the adder 82 in accordance with the invention. The back-projection segment processor 81 comprises in principle an address generator 91, a profile address generator 92, a weighting factor generator 93, a profile memory 94 and a multiplier 95 whose output is connected to an adder 86 which forms part of the adder 82 of fig. 8. The address generator 91 receives (from the control circuit 84) counting pulses $\underline{t}$ and, in response to each counting pulse, it generates two new numerical values A and B which are a measure of the position of the pixel P having the coordinates x, y as shown in fig. 5. In order to determine the values A and B for each pixel P, geometrical determined constant values are added to each profile, said constant values being determined by the source position 1 with respect to the origin 9 associated with the profile  to be processed. This will be further described hereinafter. For this pixel P a contribution is then calculated. The two numerical values A and B serve to locate the back-projection values $H(\delta, \Theta)$ and to determine the weighting factor $C \cdot B^{-2}$. The numerical value B can be used as an address to search for the weighting factor $C \cdot B^{-2}$ in a weighting factor memory. Instead of storaging all the weighting factors $C.B^{-2}$ which are addressed by the factor B, use can also be made of a memory in which the values 1/B are stored. These values 1/B are then addressed by the address B and are multiplied together in order to form the distance factor $1/B^2$. Thus, be using a single multiplier an entire memory can be saved. The values 1/B $\underline{per\ se}$ is also required, as will be demonstrated hereinafter. The numerical values A and B are both applied to the profile address generator 92 which generates an address as a function of the value A/B to search for the back-projection value $H(\delta, \Theta)$. When the measurement paths are equiangularly distributed, the profile address generator 92 may comprise a memory in which an arc tan table ( $\delta$ = arctan A/B) is stored, and which is addressed by the values A and B. The profile address generator 92 may also comprise a memory and a multiplier, the memory being addressed by the value B in order to find the value 1/B which is then applied to the multiplier together with the value A, so that the output of the multiplier supplies an address A/B. When non-equidistantly or non-equiangularly determined groups of measurement data are to be back-projected, it is useful to add to the profile address generator 92 an additional freely programmable memory which is addressed by the address A/B. The additional memory enables a desirable address translation of the address A/B to the unequally spaced positions of measurement data values within the group to be back-projected. The addressed back-projection value H( $\delta$ , $\theta$ ) is also applied, as is the weighting factor C . B$^{-2}$ to the multiplier 95 whose output is connected to an input 86a of the adder 86 which forms part of the adder 82 of fig. 8. The output of a multiplier of a further segment processor 81 is connected to the second input 86b of the adder 86. The sum of the two contributions applied to the adder 86 is applied to the adder 87 where it is incremented by the contribution calculated by a third segment processor 81. The sum thus formed is applied to an input 88a of a third adder 88. A sum of the contribution of three further segment processors, formed _via_ two adders (not shown), is applied to a second input of the adder 88. The output 89 of the adder 88 is connected to the memory control circuit 83.

The accuracy of the calculations performed by the segment processors 81 can be increased, if necessary, by means of the following steps which will be described with reference to fig. 9b. For each value H( $\delta_1$, $\theta$ ) an increment HS( $\delta_1$, $\theta$ ) is determined which is equal to the difference between two adjacent values H( $\delta_1$, $\theta$ ) and H( $\delta_{1+1}$, $\theta$ ). This increment HS( $\delta_1$, $\theta$ ) is fetched simultaneously with the address A/B generated by the profile address generator 92 (in practice, the memory 94 then consists of two parallel driven memories). Both values H( $\delta_1$, $\theta$) and HS( $\delta_1$, $\theta$ ) are applied to an interpolator 94' (see fig. 9b). The interpolator 94' operates as follows: the address A/B generated by the address generator 92 is larger than the value $\delta_1$ and smaller than $\delta_{1+1}$. This means that the most significant part MSP of the address A/B is equal to $\delta_1$ and that the least significant part LSP (the part "beyond the decimal point") is a measure of the disposition of the address A/B between the addresses $\delta_1$ and $\delta_{1+1}$. The least significant part LSP is applied to a multiplier 941 and so is the increment HS( $\delta_1$, $\theta$ ) (addressed by MSP(A/B)). The product of the vaues presented to the multiplier 941 (LSP and HS( $\delta_1$, $\theta$ )), is added to the profile values H( $\delta_1$, $\theta$ ) via an adder 942, after which the sum is presented to the multiplier 95 for further processing.

        A further step to increase the accuracy is the adaptation of the profile address arctan A/B which is generated by the profile address generator 92. The values A and B generated by the address generator 91 are exact only if the positions actually occupied by the X-ray source and the detectors 5 correspond to the theoretical positions which can be generated from the geometrical constant values. The difference between $\delta_o$ of the source position 1 and the associated theoretical value can be measured and can be added to the respective geometrical values associated with the relevant profile as a correction value. The difference $\delta_o$ thus determined is then added to the theoretical address (determined by (arctan A/B)) by means of an adder 922 which is connected between the profile address generator 92 and the profile memory 94. With each profile H( $\delta_1$, $\theta_j$) there is thus associated a constant correction value which is stored in a buffer 921 via the bus DFB, as soon as a new profile is stored in the profile memory 94.

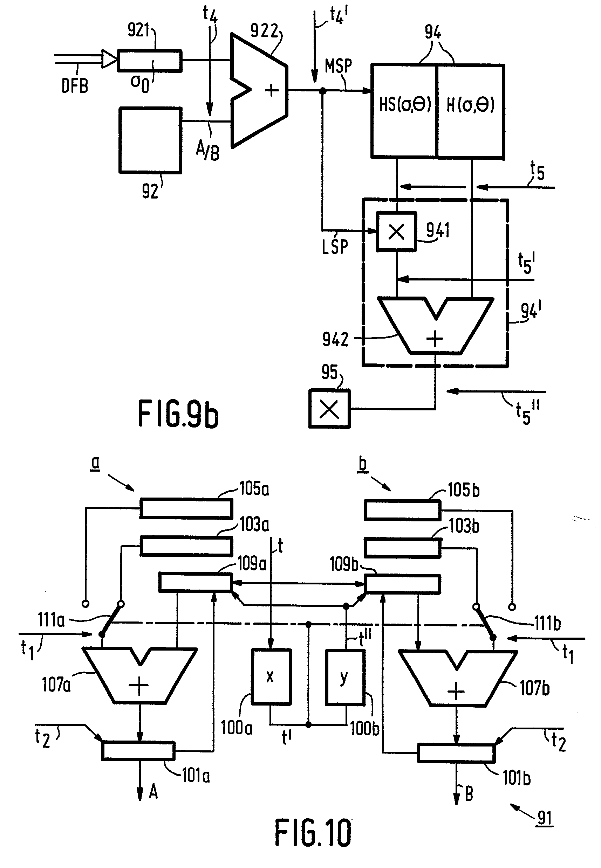

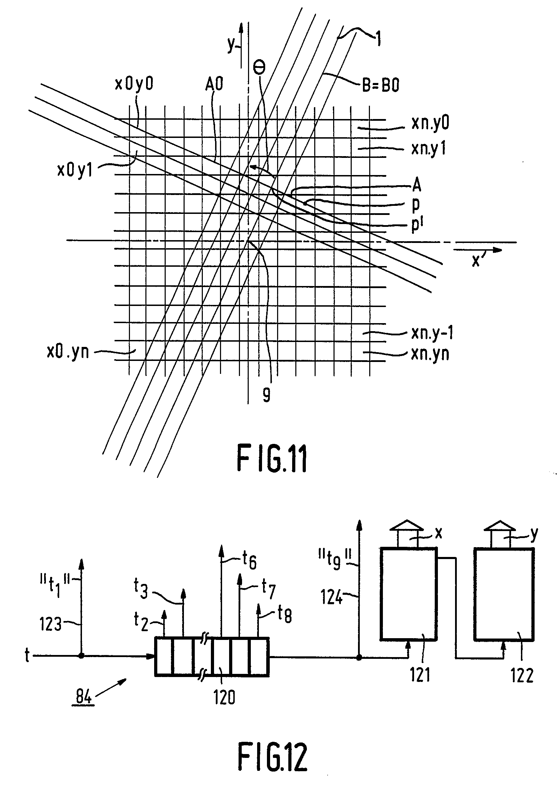

        The address generator 91 of fig. 9a is shown in greater detail in fig. 10. The address generator 91 comprises two counters 100a and 100b; the x-counter 100a receives counting pulses t. The maximum number n to be counted by the counters 100a (and 100b) equals the number

of elements $x_o$, ... $x_n$ in a row or the number of elements $y_1$, ... $y_n$, respectively in a column of the image matrix in the memory 17b. This image matrix is diagrammatically shown in fig. 11 with the elements $x_o$, $y_o$, ... $x_n$, $y_n$; $x_o$, $y_1$, ... $x_n$, $y_n$. Fig. 11 also shows the source position 1 after rotation through an angle $\theta$ about a point 9 which is situated at the origin (0, 0) of the x-y system of coordinates. It can be deduced that for the point 9 at $x_i$, $y_i$ the distance A between p and p' (the projection point of p onto the central ray 8) can be expressed by $x_i$ . cos $\theta$ + $y_i$ . sin $\theta$ , and that the distance B between 1 and p' can be expressed by $x_i$ . sin $\theta$ + $y_i$ . cos $\theta$ + D, D being the distance between the source 1 and the origin 9. It is to be noted that a constant value of B is associated with each position on the line p-p'.

The counter 100a (fig. 10) receives control pulses $\underline{t}$ (see fig. 8) and counts through all x-positions, starting from the position $x_o$ (up to and including $x_n$) while the count in the counter 100b (position y) remains the same. After the final position $x_n$ has been reached, the counter 100a returns to its starting position $x_o$, thus supplying a control pulse t' to the counter 100b the count of which is incremented by one ($y_i \longrightarrow y_{i+1}$). After this operation has been repeated $\underline{n}$ times, the counter 100a and the counter 100b will have returned to their starting position and all the addressed in the memory matrix 17b will have been addressed.

In addition to the two counters 100a and 100b, the address generator $\underline{91}$ comprises two parallel operating count segment processors $\underline{a}$ and $\underline{b}$ which generate the values A and B, respectively, in cooperation with the counters 100a and 100b. Each count segment processor $\underline{a}$ and $\underline{b}$ comprises four buffers 101a, b; 103a, b; 105a, b; 109a, b; an adder 107a, b, and a switch 111a, b. The buffers 101a, b; 103a, b and 105a, b store the constant geometrical numerical values which are associated with a profile H( $\delta_1$, $\theta$) to be back-projected. The numerical values are loaded into the buffers 101a, b through 105a, b while a profile H( $\delta$ , $\theta$ ) is being loaded into a section of the profile memory 94. These buffers are denoted by the reference numeral 91' in fig. 9 and receive their constant numerical values _via_ the bus DFB. A first constant geometrical value is referred to as $A_o$, $B_o$ and is stored in the buffer 101a, b. The numerical values $A_o$ and $B_o$ represent the distances A and B, respectively, which are associated with the element $x_o$, $y_o$ for which the first back-projection values is calculated. In the buffers 103a, b there are stored the values A1 and B1 which are used to form numerical values A' and B' from the numerical values $A_o$ and $B_o$ associated with the element $x_o$, $y_o$, the numerical values A' and B' being associated with the element $x_1$, $y_o$. As has already been described,

$A' = A_o + x_1 \cdot \cos \theta = A_o + \cos \theta$ , and
$B' = B_o + x_1 \cdot \sin \theta = B_o + \sin \theta$.

Thus, the buffers 103a, b store a value proportional to $\cos \theta$, $\sin \theta$ , respectively. After a first central pulse $\underline{t}$, the numerical values $A_o$ , $B_o$ will be transferred to the buffers 109a, b and will also appear on the address outputs A and B of the address generator 91. After a second pulse $\underline{t}$, the adder 107a and b will add the contents of the buffers 103a and 109a and the contents of the buffers 103b and 109b, respectively, so that the outputs of the adder 107a and b will respectively provide the numerical values A' and B' which are associated with the element $x_1$, $y_o$. After each subsequent control pulse $\underline{t}$, the numerical value A', B' will increase by the value $\cos \theta$ , $\sin \theta$ , respectively, thus forming the A and B values associated with the elements $x_i$, $y_o$; $x_{i+1}$, $y_o$ etc., until the values A and B associated with the element $x_n$, $y_o$ have been calculated. The $\underline{x}$-counter 100a then supplies a pulse t' which switches over the switches 11a and 11b and connects the buffers 105a and b to the adders 107a and b, respectively, until a next pulse $\underline{t}$. In the buffers 105a and 105b the two geometrical numerical values A2 and B2 are stored which, when added to the numerical values $A(x_n, y_o)$, $B(x_n, y_o)$ associated with the element $(x_n, y_o)$, produce the numerical values $A(x_o, y_1)$, $B(x_o, y_1)$. It can now be deduced from fig. 11 that $A_2 = x_n \cdot \cos \theta + \sin \theta$ and that $B_2 = x_n \cdot \sin \theta + \cos \theta$.

After a next control pulse $\underline{t}$, the switches 111a and b will again occupy the position shown. The numerical values A and B then present in the buffers 101a and b are associated with the element $(x_o, y_1)$. A next series of pulses $\underline{t}$ will produce the values associated with the elements $(x_i, y_1)$ until $x_n$ is reached and another pulse t' is generated, etc. After a pulse $\underline{t}'$ has been generated $\underline{n}$ times (which means that for the last element $x_n$, $y_n$ the A and B numerical values have been calculated), the counter 100b supplies a pulse t" which erases the buffers 109a and b. The buffers 101a, b, 103a, b and 105a, b are then loaded with new geometrical numerical values $A_o$, $B_o$, $A_1$, $B_1$, $A_2$ and $B_2$ which are associated with a new profile H($\delta_1$, $\theta$) to be back-projected. It will be apparent that the numerical values $A_o$, $B_o$, $A_1$, $B_1$, $A_2$ and $B_2$ will differ for each profile H($\delta$, $\theta$) and will change when the distance between the source 1 and the rotation point 9 is changed. The numerical values $A_o$, $B_o$ etc. can be readily calculated by the control unit 16c for each profile H($\delta$, $\theta$) from the signals supplied by the acasor 20 during the rotation of the frame 10, and from the signals caused by operating the push-button 27 (see fig. 1a).

Fig. 12 shows diagrammatically the simplest form of a pipeline control circuit $\underline{84}$. The circuit $\underline{84}$ comprises a single shift register 120 and two counters 121 and 122. The circuit $\underline{84}$ receives pulses $\underline{t}$ which are applied to the shift register 120. $\underline{Via}$ the outputs $t_2 - t_8$ of the shift register 120, the pulses $\underline{t}$ control buffer circu ts which are denoted only by arrows $t_1$, $t_2$ ... $t_7$, $t_8$, $t_9$ in figs. 9a, b and 10 for the sake of clarity. The buffer circuits (latch circuits) are included in each segment processor 81 and serve to prevent a calculation in an arbitrary part of the segment processor
81 from being distrubed by a calculation in a preceding
part thereof. During the period between the pulses $t$ each
part of the segment processor 81 "sees" its "own" input
variables stored in the preceding buffer. As follows
from the figs. 9a, b and 10, only after the ninth pulse
$t_9$ (eleven pulses in the case of fig. 9b) a contribution
$\Delta f(x_o, y_o)$ associated with an address $x_o$, $y_o$ will have
been calculated in order to be available on the output
of the adder 82. This contribution $\Delta f(x_o, y_o)$ is to be
added to the contents at the address $x_o$, $y_o$. The x-y
address applied to the memory control circuit 83 by the
pipe-line control circuit $\underline{84}$ is formed by two counters
121 and 122; the counter 121 generates the x-address
and, $\underline{via}$ its output, controls the counter 122 which
generates the y-address. The counters 121 and 122 operate
(actually) in the same way as the counters 100a and 100b
of fig. 10 and they operate in synchronism therewith.
However, the pulses $t$ applied to the counters 100a and b
are delayed by the shift register 120 through nine pulse
durations ($t_1$ - $t_9$), so that the counters 100a and b
have already received eight pulses when the counter 121
receives its first pulse. The counters 121 and 122 thus
lag the counters 100a and b by eight "addresses", so that
the counters 121 and 122 generate the x-y address exactly
at the instant at which the associated calculated con-
tribution $\Delta f(x-y)$ becomes available at the output of
the adder 82. The delayed pulses $t_9$ applied to the coun-
ter 121 are also applied to the memory control circuit
83 in order to activate this circuit. Fig. 12 shows an
indication "$t_1$" on the control line 123 to the counters
100a and b and on the control line 124 to the circuit
83 an indication "$t_9$" in order to illustrate the time
delay exerted on the control pulses $t$ by the shift register 120. It is to be noted that the convolution device
16a (fig. 7) and the back-projection device 16b (figs. 8,
9a, b, 10) can be simply switched over so that (measured)
data values determined along parallel measurement paths

PHN 10.482 30 0107253

can also be processed. To achieve this, the (pre-conditioning) factor $\cos(\theta_k)$ and the value $B_o$ (see fig. 9a and fig. 10) are made equal to 1 (by modifying the contents of the buffer 101b and blocking the outputs of the adder 107b). The foregoing is important notably when a correction is performed in respect of the radiation hardening effect. Such a correction is described in US 4,217,641, in which correction data are determined from the already reconstructed image. The data values are then provided most easily along (measurement) paths which extend parallel (and equidistantly) through the reconstructed image (see US 3,778,614), so that a correction/reconstruction process should take place along the same (measurement) paths. This requirement is completely satisfied by the computer tomography apparatus in accordance with the invention.

CLAIMS

1.        A method of determining the distribution of radiation attenuation in a body section which is irradiated from a plurality of directions by a flat, fan-shaped beam of penetrating radiation which diverges from a source point, all directions extending through a central point and being situated in the body section, a group of measurement data being determined, for each measurement direction, which is a measure of the radiation attenuation along an associated group of divergent measurement paths, each group of measurement data being either convolved with a group of convolution numbers, or Fourier transformed, filtered and back-transformed, after which the measurement data thus treated is back-projected into a matrix of pixels, characterized in that prior to convolution or Fourier transformation, each measurement data value of a group is multiplied by a pre-conditioning factor which is determined by the cosine of the angle included between a central line connecting the point source to the central point, and the measurement path associated with the measurement data value to be pre-conditioned, after which the pre-conditioned measurement data is either convolved or Fourier transformed, filtered and inverse-Fourier transformed as though the pre-conditioned measurement data had been measured along parallel measurement paths, the convolved or filtered measurement data being multiplied by a post-conditioning factor which is inversely proportional to the variation and directly proportional to the square of the cosine of the angle between the central ray and the measurement path associated with the convolved or filtered measurement data, after which the measurement data values thus post-conditioned are back-projected along the same measurement paths along which those measurement data values were determined.

2.          A method as claimed in Claim 1, characterized in that the measurement data values to be back-projected are multiplied by a distance factor which is inversely proportional to the distance between the source point and a projection point on the central line which is determined by the projection on the central line of a pixel for which a contribution to the radiation attenuation is calculated.

3.          A method as claimed in Claim 1, in which the distance R2 between the central point and the source point is not equal to the distance R1 betweem tje central point and a detection position at which the radiation is measured after having passing through the body in positions of the source point which are equiangularly situated with respect to the central point, for each detection position there being obtained a group of measurement data values which have been measured along a group of measurement paths which diverge from the detection position, characterized in that the pre-conditioning factor Q(k) is determined by

$$Q(k) = \frac{V + \cos(k. \Delta\alpha)}{V^2 + 1 + 2V.\cos(k \Delta\alpha)}$$

wherein v is the quotient of the distance R1 and the distance R2, and

k. $\Delta\alpha$     is the acute angle enclosed by the connecting line between a detection position and the central point and by a connecting line between a source point position and the measuring path along which the measurement data value has been determined,

the post-conditioning factor being determined by:

$$Q(k) = \frac{V^2 + 1 + 2V.\cos(1. \Delta\alpha)}{(1 + V.\cos(1. \Delta\alpha)}$$

wherein

1. $\Delta\alpha$     is the angle enclosed by the connecting line between a detection position and the central point and by the connecting line between the
central point and a source position in which
the filtered measurement data value has been
determined, $\Delta\alpha$ being the angle enclosed by
two connecting lines which extend from the
central point to two successive source positions.

4.        A method of determining the distribution of
radiation attenuation in a body section, which is irradiated from a plurality of directions by a flat, fan-shaped
beam of penetrating radiation which diverges from a source
point, all the irradiation directions extending through
a central point and being situated in the body section,
a group of measurement data being determined for each
measurement direction, which are a measure of the radiation attenuation along an associated group of divergent
measurement paths, after which from the groups of measurement data there are formed sub-groups of measurement
data which are associated with measurement paths which
extend substantially parallel to one another, after which
each sub-group of selected measurement data is convolved
and subsequently back-projected into a matrix of pixels
along the measurement paths associated with the sub-group,
characterized in that the convolved measurement data are
multiplied by a post-conditioning factor which is inversely proportional to the variation of the distance
(dr(l)/dl) between a measurement path l and the central
point.

5.        A method as claimed in Claim 4, in which the
measurement paths in the divergent beam are equiangularly
distributed and exhibit an angular spacing $\Delta\alpha$, charac-
terized in that the post-conditioning factor is inversely
proportional to the cosine of the angle enclosed by the
central ray and a measurement path along which the measurement data to be post-conditioned has been determined.

6.        A device for determining the distribution of
radiation attenuation in a body slice, comprising: at
least one source for generating a flat, fan-shaped beam
of penetrating radiation for irradiating the body along a plurality of measurement paths which diverge from the source and which are situated in the body section, from a plurality of source positions which are regularly distributed over at least 180°, a central ray in the divergent beam passing through a central point from each source position, an array of detectors for detecting radiation after passing through the body along the measurement paths in order to supply, for each source position, groups of measurement data which are a measure of the radiation attenuation occurring along the respective divergent measurement paths through the body section, a processing device which comprises a memory for the storage of measurement data,

- a filter device for filtering each group of measurement data,

- a back-projection device for allocating and back-projecting the filtered measurement data to matrix elements of a memory matrix for storing the sum of the back-projected, filtered measurement data, and

- a display device for displaying the accumulated back-projected measurement data stored in the memory matrix, characterized in that the processing device furthermore comprises arithmetic means for multiplying each measurement data value of each group by a pre-conditioning factor which is determined by the cosine of the angle included between a line connecting the source to the detector which measured the measurement data value, and a central line connecting the source to a central point, and for multiplying each f ltered measurement data value by a post-conditioning factor which is inversely proportional to the change of the angle between the central line and the measurement path associated with the filtered measurement data value, as a function of the associated measurement path, and which is proportional to the square of the cosine of this angle, the filtering device for filtering the pre-conditioned measurement data being a filtering device for filtering parallel and equidistantly measured measurement values, the back-projection device comprising means for multiplying a filtered, post-conditioned measurement data value by a distance factor which is inversely proportional to the square of the distance between a source point and a projection point of a pixel which is situated on the central connecting line and in which a back-projection is determined.

7.          A device as claimed in Claim 6, characterized in that the arithmetic means of the processing device comprises a first multiplier and a pre-conditioning factor memory whose output is coupled to the input of the first multiplier and a further input of which forms an input for measurement data, an output thereof being used to apply the pre-conditioned measurement data to the filtering device.

8.          A device as claimed in Claim 6 or 7, characterized in that the arithmetic means of the processing device comprise a second multiplier and a post-conditioning factor memory whose output is connected to an input of the second multiplier and a further input of which forms an input for filtered measurement data, an output thereof being used to apply the post-conditioned measurement data to the back-projection device.

9.          A device as claimed in Claim 7 or 8, characterized in that  the means of the back-projection device comprises several back-projection segment processors and an adder, the back-projection segment processors being connected in parallel to one another, the output of each segment processor being connected to an input of the adder for adding the filtered measurement data determined in each back-projection segment processor and back-projected into the same matrix element, the filtering device supplying each back-projection segment processor with a different group of post-conditioned, filtered measurement data values.

10.          A device as claimed in Claim 9, characterized in that each back-projection segment processor comprises a profile memory for storing post-conditioned, filtered measurement data, a distance factor generator, a multiplier and addressing means, the addresses generated by the addressing means being capable of fetching a distance factor and a post-conditioned, filtered measurement data value via the distance factor generator and from the profile memory, respectively, which can be applied from outputs of the distance factor generator and the profile memory to the multiplier whose output is connected to an input of the adder.

0107253

FIG.1a

FIG.1b

**FIG.3**

**FIG.2**

**FIG.4**

0107253

2-VII-PHN 10482

0107253

FIG.5

$$p^l(k,\Theta) = p(k,\Theta).\cos(\sigma k) \quad \text{—I}$$

$$g(l,\Theta) = R(l-k) \circledast p^l(k,\Theta) = F_l^{-1}\left\{R \cdot F_k(p(k^l\Theta))\right\} \quad \text{—II}$$

$$H(\sigma_l,\Theta) = \cos^2(\sigma_l) \cdot (d\,\sigma_l/dl)^{-1} \cdot g(l,\Theta) \quad \text{—III}$$

$$\Delta f(x,y)_\Theta = C \cdot B^{-2}(x,y) \cdot H(\sigma,\Theta) \quad \text{—IV}$$

$$f(x,y) = \sum_\Theta \Delta f(x;y)_\Theta \quad \text{—V}$$

FIG.6

3-VII-PHN 10482

4/7

FIG.7

FIG.8

4 - VII - PHN 10482

FIG.9a

6/7

FIG.9b

FIG.10

0107253

**FIG.11**

**FIG.12**

7-VII- PHN 10482

**European Patent Office**

**EUROPEAN SEARCH REPORT**

Application number

EP 83 20 1490

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | COMPUTER GRAPHICS AND IMAGE PROCESSING, vol. 10, no. 1, May 1979, pages 30-47, Academic Press, Inc., New York, US G.T. GULLBERG: "The reconstruction of fan-beam data by filtering the back-projection" * Page 35, lines 15-17; page 41, lines 3-30 * | 1 | G 06 F 15/20 |

-----

|  |  |  | TECHNICAL FIELDS SEARCHED (Int. Cl. ³) |
|---|---|---|---|
|  |  |  | G 06 F 15/20 |

The present search report has been drawn up for all claims

| Place of search THE HAGUE | Date of completion of the search 09-01-1984 | Examiner BURGAUD C. |
|---|---|---|